**Europäisches Patentamt**

**European Patent Office**

**Office européen des brevets**

(19)

(11) Numéro de publication: **0 117 214**

**A1**

(12)

# DEMANDE DE BREVET EUROPEEN

(21) Numéro de dépôt: **84420025.3**

(51) Int. Cl.³: **G 05 B 19/04**

(22) Date de dépôt: **09.02.84**

(30) Priorité: **09.02.83 FR 8302284**

(43) Date de publication de la demande:
**29.08.84 Bulletin 84/35**

(84) Etats contractants désignés:
**CH DE GB IT LI SE**

(71) Demandeur: **FRANK ET PIGNARD Société Anonyme :
B.P. 40
F-74301 Cluses(FR)**

(72) Inventeur: **Thonin, Daniel
La Croisette
F-74800 St Pierre En Faucigny(FR)**

(74) Mandataire: **Ropital-Bonvarlet, Claude et al,
Cabinet BEAU DE LOMENIE 99, Grande rue de la
Guillotière
F-69007 Lyon(FR)**

(54) **Dispositif de commande d'automatismes programmable de façon séquentielle.**

(57) - Dispositif de commande d'automatismes programmables de façon séquentielle.

- Le dispositif comprend des moyens (130) d'entrée de données, des mémoires (200) pour stocker ces données, des moyens de détection des signaux fournis par des capteurs (608,609; 618,619), des moyens (210,220,300,310) de traitement et de gestion des données stockées, des moyens (600) d'application de signaux de commande à des actionneurs et un compteur (100) d'avance de programme et d'adressage des mémoires.

- Application notamment à la commande de machines-outils.

Fig-1

## Dispositif de commande d'automatismes programmable de façon séquentielle.

La présente invention a pour objet un dispositif de commande d'automatismes programmable de façon séquentielle, comprenant des moyens d'entrée de données, des mémoires pour stocker les données fournies par les moyens d'entrée de données, des moyens de détection des signaux fournis par des capteurs, des moyens de traitement et de gestion des données stockées dans les mémoires et des moyens d'application de signaux de commande à des actionneurs.

On connait déjà divers types de dispositifs de commande d'automatismes programmables. La plupart des dispositifs existants nécessitent toutefois la présence d'une matrice de programmation, par exemple à diodes, dont le nombre de lignes est égal au nombre de séquences désirées et le nombre de colonnes est égal au nombre de sorties de commandes reliées à des actionneurs. De tels dispositifs sont assez compliqués à programmer et se prêtent mal à des modifications de programme. Par ailleurs, les diverses sorties de commande ne sont pas entièrement indépendantes les unes des autres et une bonne utilisation de ces dispositifs nécessite un certain nombre de connaissances relatives à la logique des automatismes.

On connaît également des dispositifs de commande d'automatismes à microprocesseur. Toutefois, de tels dispositifs nécessitent la présence d'une console de programmation qui reste relativement onéreuse et impliquent la connaissance de langages de programmation.

La présente invention vise à remédier aux inconvénients précités et à réaliser un dispositif de commande d'automatismes utilisable de façon séquentielle et facilement programmable sans que des connaissances particulières de logique ou d'un langage de programmation soient nécessaires.

L'invention a encore pour but de réaliser un dispositif compact de commande qui se prête à une extension aisée du nombre d'actionneurs qui peuvent être commandés et qui ne nécessite pas, lors de la programmation, la connaissance préalable de la position effective des actionneurs devant être commandés.

L'invention vise encore à permettre une commande simultanée de plusieurs actionneurs d'une façon indépendante les uns des autres.

Ces buts sont atteints grâce à un dispositif de commande du type mentionné en tête de la description dans lequel, conformément à l'invention, il est incorporé un compteur d'avance de programme et d'adressage des mémoires, les moyens d'entrée de données comprennent une pluralité de commutateurs en nombre égal au nombre d'actionneurs, et des moyens sont prévus pour n'autoriser le passage d'une séquence à la suivante qu'après comparaison de l'ensemble des signaux fournis par les capteurs et des données relatives à la séquence en cours enregistrées dans les mémoires.

Selon une caractéristique particulièrement avantageuse, le dispositif de commande selon l'invention comprend à la fois des moyens d'application de signaux de commande à des actionneurs à mouvement simple et des moyens d'application de signaux de commande à des actionneurs à mouvement double d'aller et retour.

De façon plus particulière, le dispositif de commande comprend en outre des moyens de temporisation associés à chacun des moyens d'application de signaux de commande à des actionneurs à mouvement simple ou à mouvement double d'aller et retour.

Selon un mode particulier de réalisation, les moyens d'autorisation de passage d'une séquence à l'autre comprennent des coupleurs optoélectroniques d'entrée dont l'état est fonction de l'état des capteurs, des moyens de gestion des informations fournies par les coupleurs optoélectroniques d'entrée et des données enregistrées relatives à la séquence en cours, lesquels moyens de gestion comprennent une porte NI, et des moyens de mise en forme du signal fourni par lesdits moyens de gestion.

Selon une application particulière, adaptée notamment à la commande de machines outils, les capteurs sont constitués par des capteurs de position dits "fin de course" et les moyens d'application de signaux de commande à des actionneurs sont constitués par des relais.

Dans ce cas, pour chaque relais de commande d'un actionneur à mouvement simple, le circuit série constitué par le capteur de fin de course avant associé et les moyens de temporisation est monté en parallèle sur la bobine dudit relais; deux coupleurs optoélectroniques d'entrée sont raccordés respectivement à chacune des bornes coopérant avec l'extrémité d'un commutateur commandé par les moyens de temporisation et relié à une source d'alimentation, l'un des coupleurs étant raccordé par l'intermédiaire du capteur de fin de course arrière associé à l'actionneur; et la sortie de l'un des deux coupleurs optoélectroniques d'entrée est reliée d'une part à une entrée de la porte NI et d'autre part à une sortie des mémoires tandis que la sortie de l'autre coupleur optoélectronique d'entrée est reliée d'une part à une autre entrée de la porte NI et d'autre part à une sortie complémentaire des mémoires.

Pour chaque relais de commande d'un actionneur à mouvement double, le circuit série constitué par le capteur de fin de course avant associé et les moyens de temporisation est monté entre l'une des bornes de la bobine du relais et la borne commune du commutateur commandé par les moyens de temporisation, l'une des bornes qui coopèrent avec l'extrémité du commutateur étant reliée à la deuxième borne de la bobine du relais et l'autre borne coopérant avec l'extrémité du commutateur étant reliée d'une part au point commun entre le capteur de fin de course avant et les moyens de temporisation et d'autre part du circuit série des différents capteurs de fin de course arrière associés aux différents actionneurs en mouvement double, lequel circuit série est relié à l'entrée d'un coupleur optoélectronique d'entrée dont la sortie est reliée d'une part à une entrée de la porte NI et d'autre part à un circuit de polarisation.

Avantageusement, le dispositif de commande comprend en outre des moyens de remise à zéro du programme enregistré, et des moyens de commutation assurant une avance rapide du programme ou une avance pas à pas.

D'autres caractéristiques et avantages de l'invention ressortiront de la description qui fait suite d'un mode particulier de réalisation, donné à titre d'exemple, en référence aux dessins annexés, sur lesquels :

- La figure 1 est un schéma bloc montrant les différents circuits d'un dispositif programmable de commande d'automatismes conforme à l'invention,

- la figure 2 est un schéma des circuits de commande d'un relais de sortie commandant un organe d'actionnement à mouvement simple,

- la figure 3 est un schéma de circuits de commande d'un relais de sortie double commandant un organe d'actionnement à mouvement d'aller et retour,

- les figures 4 et 5 représentent de façon schématique des organes d'actionnement et des capteurs de position, adaptés pour coopérer avec les circuits de commande des figures 2 et 3 respectivement,

- les figures 6 A et 6 B sont des schémas plus détaillés d'une partie des circuits du dispositif programmable selon l'invention, montrant les différents moyens de programmation,

- la figure 7 est un schéma de détail montrant des circuits de gestion des informations fournies par les capteurs de position des organes d'actionnement.

- la figure 8 est un schéma de détail montrant une partie des circuits de commande des divers relais de sortie associés aux organes d'actionnement.

- la figure 9 est une vue d'un exemple de pupitre de commande et de visualisation d'un dispositif programmable selon l'invention, et

- la figure 10 montre un exemple de séquence de programmation exécutable à l'aide du dispositif selon l'invention.

Le dispositif programmable de commande d'automatismes qui sera décrit ci-après permet la commande simultanée de plusieurs sorties simples $S_{10}$ à $S_{16}$ et plusieurs sorties doubles ($S_2$ à $S_9$). Une sortie simple représente une sortie à partir de laquelle peut être commandé, au cours d'un pas de programme, un mouvement simple, d'aller ou de retour, d'un actionneur tel qu'un vérin B ou un moteur. Une sortie double représente une sortie à partir de laquelle, au cours d'un même pas de programme, il est possible de commander le mouvement complexe d'aller-retour d'un actionneur tel qu'un vérin A. Ainsi, le dispositif de commande est adapté à la commande simultanée de plusieurs mouvements à chaque pas de programme, ces mouvements pouvant être de durées et de compositions différentes.

Des capteurs de position constitués par des contacts dits "fin de course" 608,609;618,619 permettent de disposer à chaque instant de signaux représentatifs de la position réelle des actionneurs B,A.

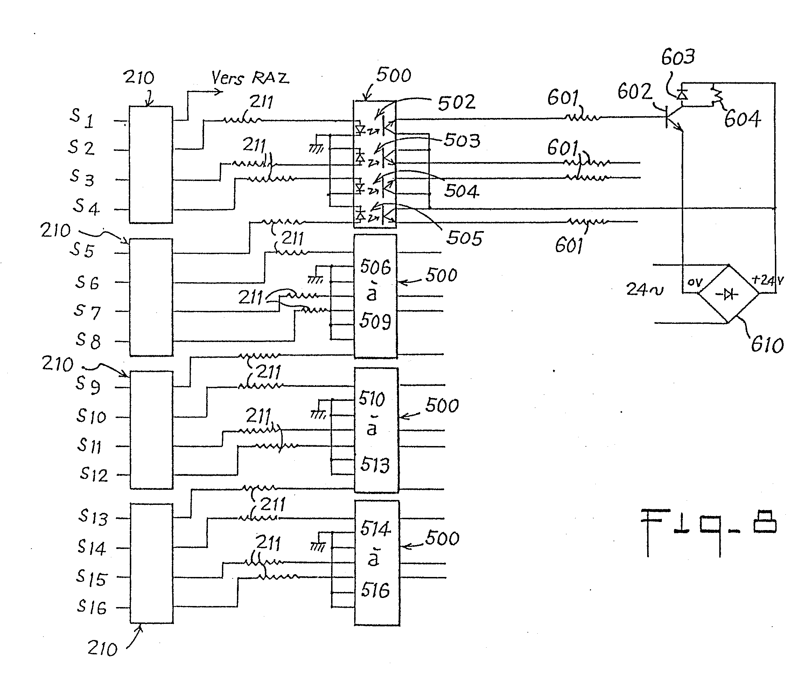

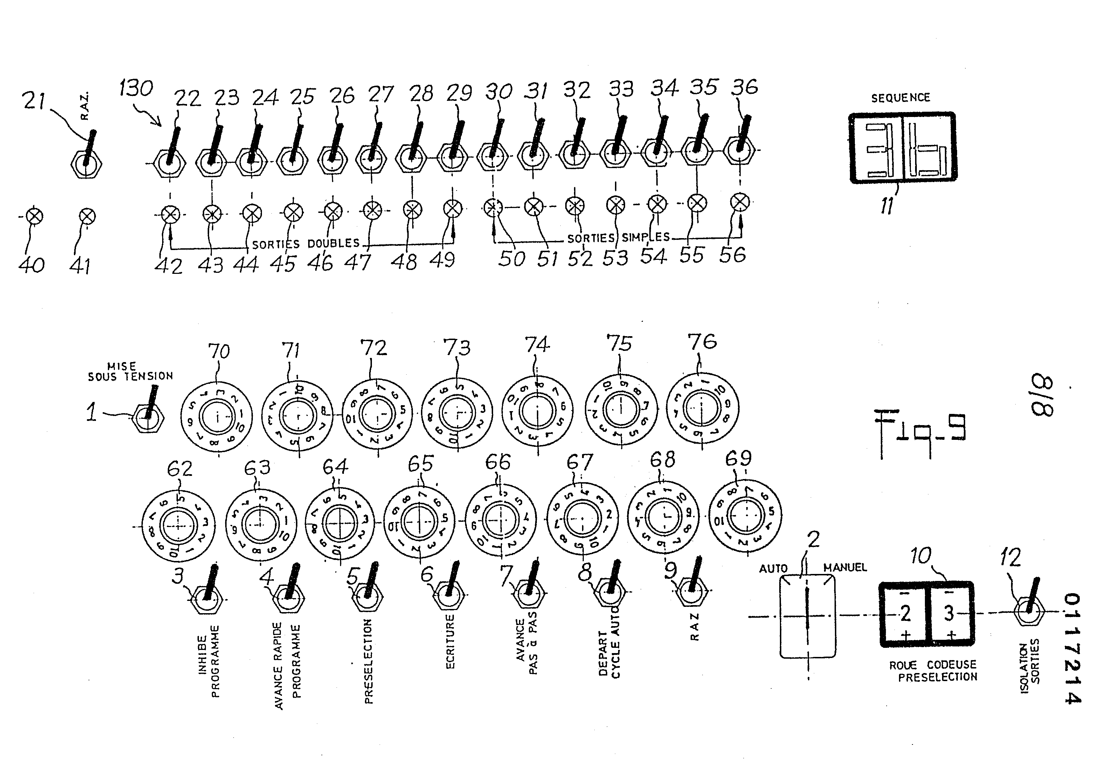

Un contact de fin de course avant 608,618 et un contact de fin de course arrière 609,619 sont associés à chacun des actionneurs B, A respectivement (Fig. 4 et 5). Ces capteurs 608,609, 618,619 permettent la production à chaque instant de signaux représentant l'évolution du programme.

Le passage d'une séquence de programme à la séquence suivante est déterminé par des circuits de gestion à partir des signaux d'entrée produits à l'aide des capteurs 608, 609, 618, 619. Un compteur 100 d'avance du programme et d'adressage de mémoires permet à chaque pas de disposer des données relatives à l'état souhaité des différentes sorties.

Au moment de la programmation, qui s'effectue pas à pas, les données correspondant à l'état souhaité des sorties $S_2$ à $S_{16}$ pour chaque pas sont introduites dans des mémoires 200 à l'aide de clés 22 à 36 en nombre égal au nombre de sorties $S_2$ à $S_{16}$. Lors de l'exécution du programme, le déroulement s'effectue également de façon séquentielle et pas à pas dans le même ordre que la programmation, et à chaque pas, les sorties qui, en fonction des données emmagasinées dans les mémoires 200 doivent être activées, le sont automatiquement.

Les signaux disponibles sur les diverses sorties $S_2$ à $S_{16}$ servent à alimenter des bobines 604, 614 de relais de commande d'actionneurs tels que des vérins B, A, mais peuvent aussi le cas échéant être adaptées pour fournir un code binaire à n bits en vue de piloter des ensembles numériques.

D'une manière générale, le dispositif de commande selon l'invention constitue un système de contrôle logique et un directeur de commande qui permet le pilotage de différents mouvements d'actionneurs, ou combinaisons de cycles, aussi bien en logique combinatoire qu'en logique séquentielle.

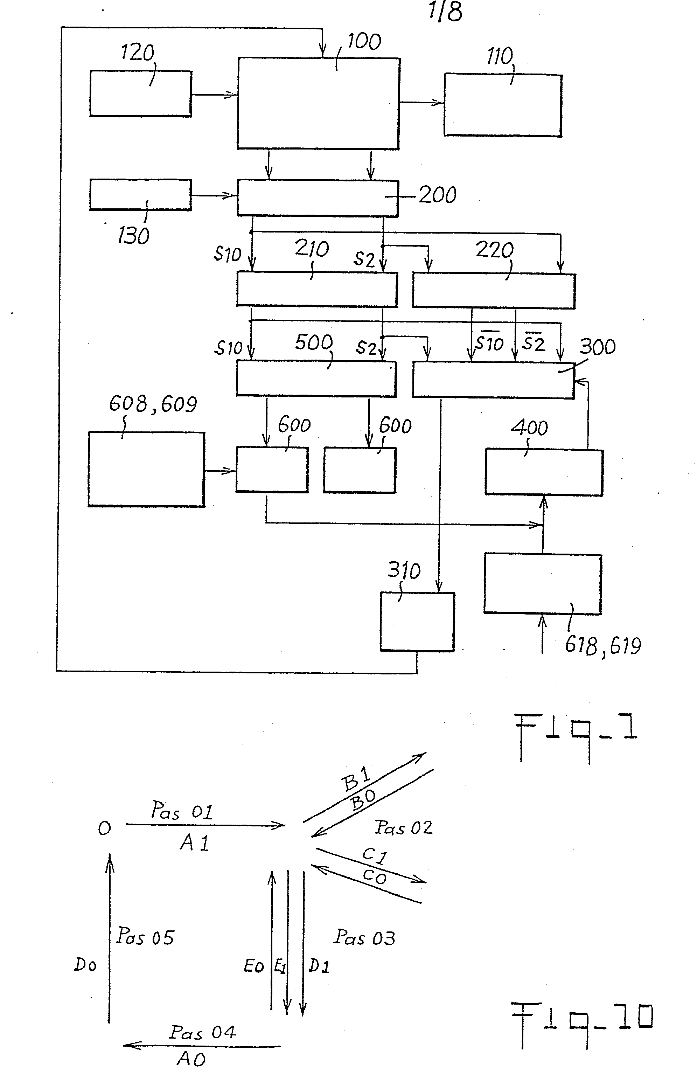

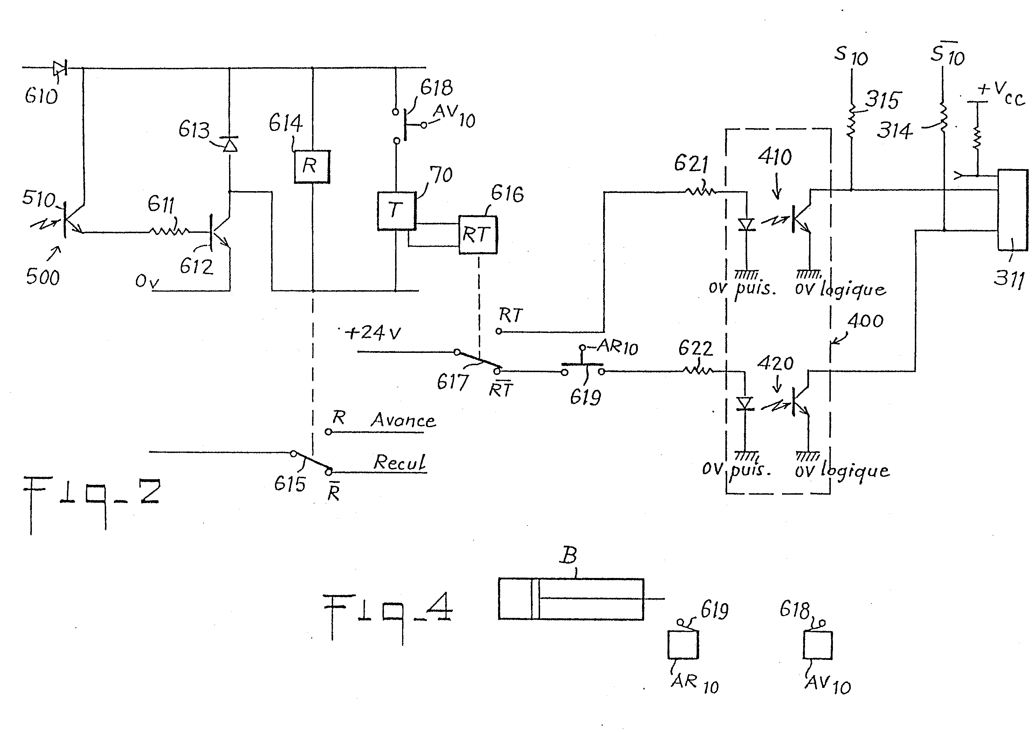

La figure 1 permettra de mieux comprendre le fonctionnement interne d'un dispositif de commande selon l'invention adapté pour commander un mouvement double d'aller et retour sur une sortie double $S_2$ et un mouvement simple sur une sortie simple $S_{10}$. Le fonctionnement reste analogue lorsque le nombre de sorties est plus important, comme dans le cas des figures 6 à 9 où le dispositif de commande présente sept sorties simples $S_{10}$ à $S_{16}$ et huit sorties doubles $S_2$ à $S_9$.

Un compteur 100 assure l'avance du programme et l'adressage de mémoires 200 dans lesquelles des données sont emmagasinées lors de la phase de programmation à l'aide des circuits 130 d'entrée de données. Des circuits 110 assurent la visualisation du numéro de la séquence du programme qui est enregistré ou exécuté. Les mémoires 200 sont associées à des circuits interfaces 210, 220 qui permettent d'appliquer d'une part directement des signaux $S_{10}$, $S_2$ correspondant aux données enregistrées dans les mémoires relativement à l'état des sorties pour la séquence en cours (interface 210) et d'autre part des signaux $\overline{S_{10}}$, $\overline{S_2}$ complémentaires des signaux $S_{10}$, $S_2$ (interface 220).

Les signaux $S_{10}$, $S_2$ issus du circuit interface 210 sont appliqués à un étage 500 de coupleurs optoélectroniques de sortie qui assure la délivrance de signaux de sortie sur les moyens 600 de commande d'un actionneur à mouvement simple et d'un actionneur à mouvement double.

Les signaux $S_{10}$, $S_2$, $\overline{S_{10}}$, $\overline{S_2}$ sont en outre appliqués à un circuit 300 de gestion des informations fournies à partir, d'une part, des capteurs de position 608, 609 associés à l'actionneur à mouvement simple et, d'autre part, des capteurs de position 618, 619 associés à l'actionneur à mouvement double. Les informations fournies à partir des différents capteurs de position sont appliquées au circuit de gestion 300 par l'intermédiaire d'un étage 400 de coupleurs optoélectroniques d'entrée. La sortie du circuit 300 de gestion et de traitement est reliée par l'intermédiaire d'un circuit de mise en forme 310 au compteur 100 pour incrémenter celui-ci d'un pas lorsque l'état des capteurs 608,609, 618, 619 indique que les différents ordres fournis par les circuits de sortie 600 ont été exécutés. Lors de l'inscription du programme, la fourniture de données s'effectue à l'aide du circuit 130 d'entrée de données, et le passage d'une séquence à l'autre peut s'effectuer à l'aide d'un circuit 120 d'avance manuelle du compteur 100.

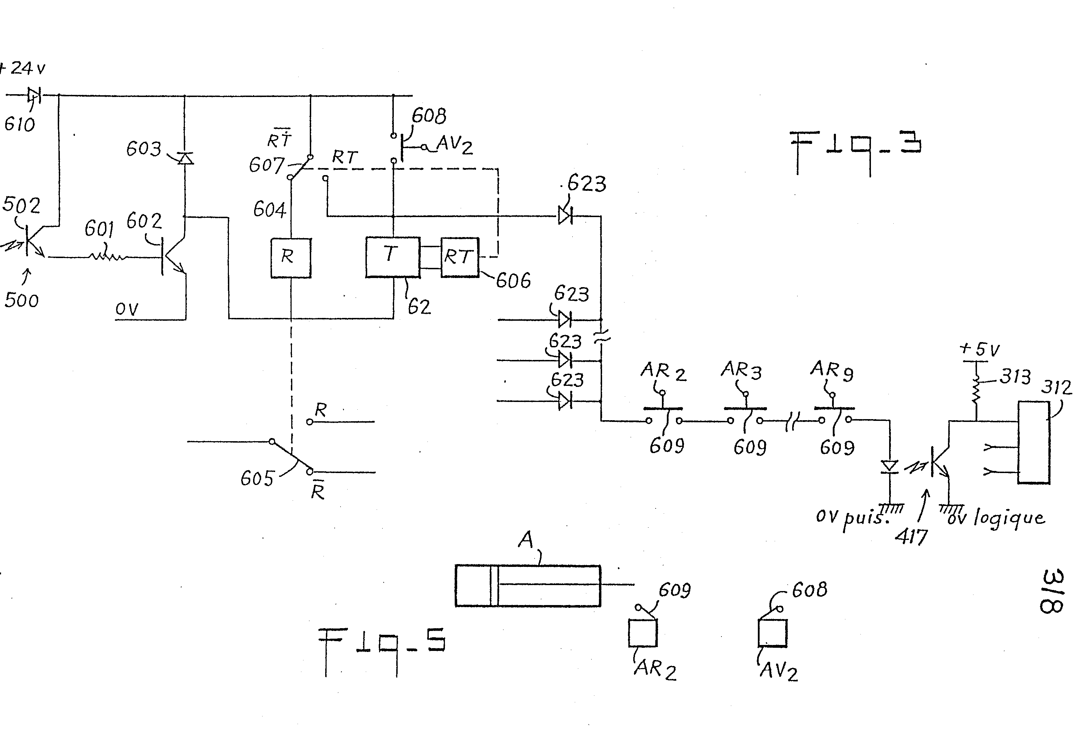

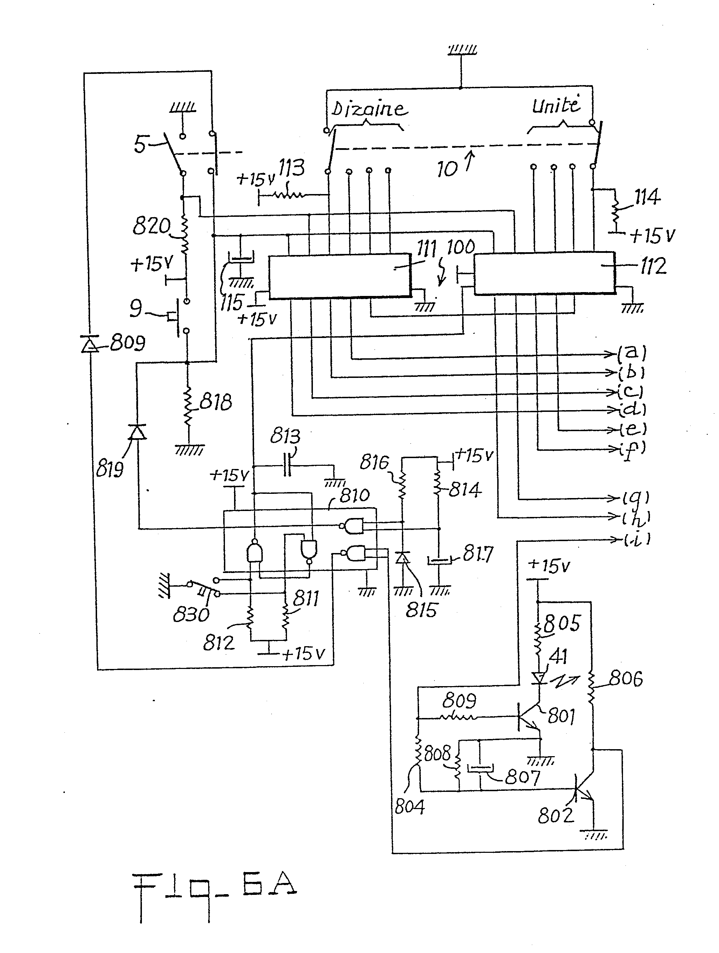

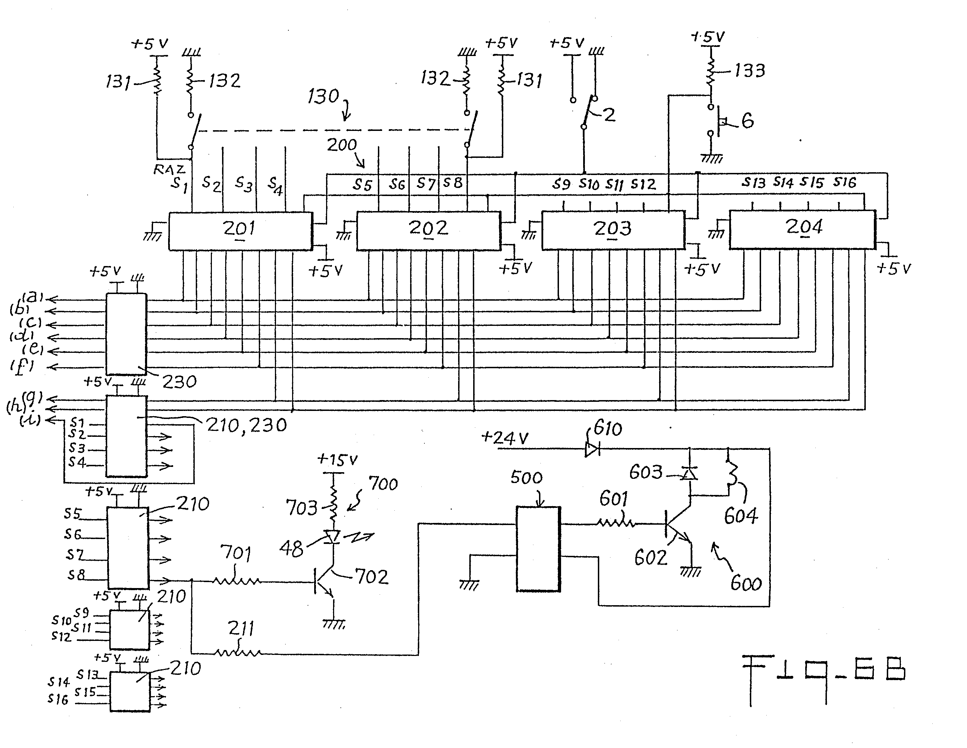

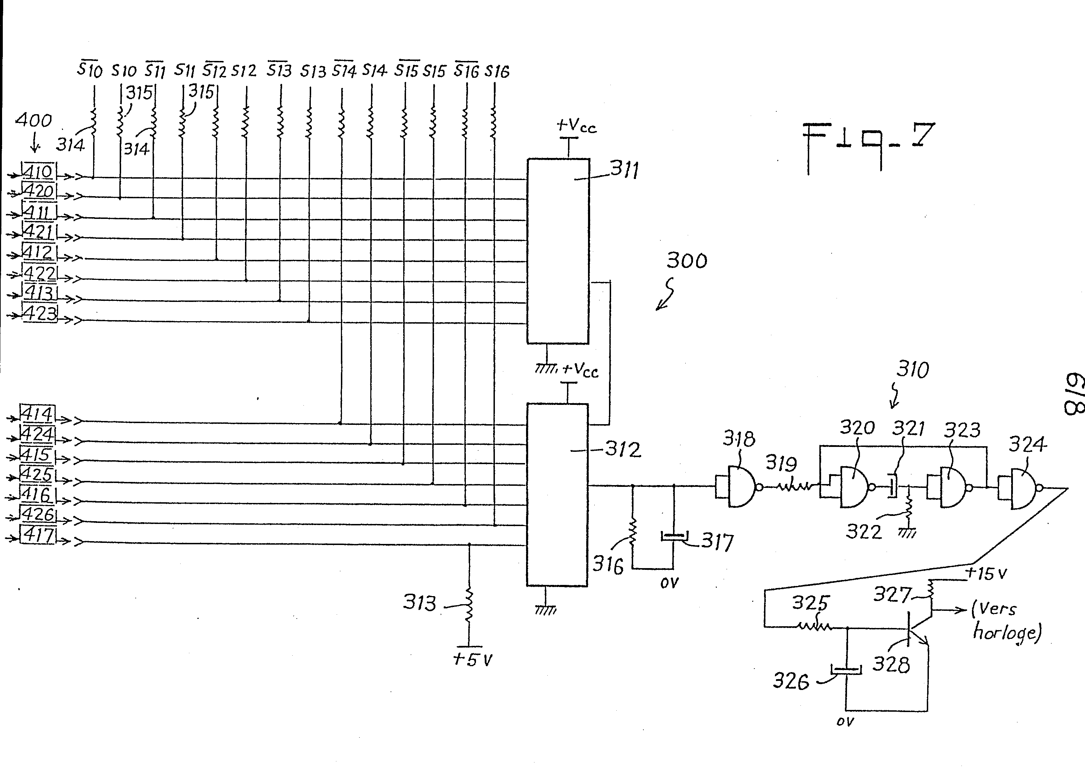

La configuration des capteurs 608, 609, 618, 619 associés aux sorties à mouvement simple et aux sorties à mouvement double, ainsi que la constitution des circuits de gestion 300 et de mise en forme 310 qui assurent le passage automatique d'une séquence de programme à la séquence suivante seront décrites ci-dessous en référence aux figures 2,3 et 7 tandis,que la figure 8 montre la façon dont sont commandés les actionneurs à partir des données $S_2$ à $S_{16}$ inscrites en mémoire.

On voit sur la figure 8 les circuits d'interface 210 auxquels sont appliqués les signaux $S_1$ à $S_{16}$ représentant les données inscrites dans les mémoires 200 et permettant de fournir des signaux de sortie commandant des actionneurs à mouvement simple (à partir des signaux $S_{10}$ à $S_{16}$), à mouvement double (à partir des signaux $S_2$ à $S_9$) ou une opération de remise à zéro (à partir du signal $S_1$). Chaque sortie $S_2$ à $S_{16}$ des circuits interfaces 210 est reliée par l'intermédiaire d'une résistance 211 à un coupleur optoélectronique 502 à 516 respectivement d'un étage 500 de coupleurs optoélectroniques de sortie. Chaque coupleur optoélectronique comprend de façon classique une diode électroluminescente et un phototransistor.

L'émetteur du phototransistor de chaque coupleur optoélectronique 502 à 516 est relié par l'intermédiaire d'une résistance 601 à la base d'un transistor 602 dont le collecteur est relié par l'intermédiaire d'une diode 603 montée en inverse à une borne d'une source d'alimentation en courant continu constituée par exemple par une sortie d'un pont redresseur 610 alimenté en courant alternatif. L'émetteur du transistor 602 est lui-même relié à l'autre borne de la source d'alimentation 610 tandis que la bobine 604 d'un relais 604, 605 de commande d'un actionneur est montée en parallèle sur la diode de protection 603.

Chaque sortie $S_2$ à $S_{16}$ est reliée à un coupleur photoélectronique 502 à 516 respectivement dont la sortie est connectée à un circuit du type décrit ci-dessus qui assure la commande de l'alimentation d'une bobine 604 du relais de commande de l'actionneur associé à la sortie concernée. Sur la figure 8, pour la clarté du schéma on n'a cependant représenté que le circuit d'alimentation de la bobine de relais 604 associée à la sortie $S_2$ et sans introduire de moyen de temporisation. Les divers circuits d'alimentation de bobines de relais 604 associées à des sorties à mouvement double $S_2$ à $S_9$ sont plus particulièrement conformes au schéma de la figure 3, tandis que les circuits d'alimentation de bobines de relais 614 associées à des sorties à mouvement simple $S_{10}$ à $S_{16}$ présentent une configuration analogue mais portent des références numériques différentes comme indiqué sur la figure 2, les éléments 611 à 615 étant analogues aux éléments 601 à 605 des figures 3 et 8.

Les figures 2 et 3 permettent de voir de quelle manière les capteurs de position 608, 609 et 618, 619 associés aux actionneurs à mouvement double A et aux actionneurs à mouvement simple B respectivement coopèrent pour fournir au circuit de gestion 300, par l'intermédiaire de l'étage 400 de coupleurs optoélectriques d'entrée, des signaux permettant au circuit de gestion 300 de délivrer un signal d'autorisation de passage à la séquence suivante.

La figure 3 montre le schéma du circuit de commande d'un relais 604, 605 de commande d'un actionneur A à mouvement double d'aller et retour, auquel sont associés des contacts de fin de course avant 608 et arrière 609 ainsi que des moyens de temporisation réglable 62, 606, 607. Ces moyens de temporisation comprennent un potentiomètre de réglage 62 permettant de régler la durée T de la temporisation associée à une bobine 606 d'un relais de commande de temporisation et à un contact 607 commandé par la bobine 606 et destiné à assurer l'alimentation sélective de la bobine 604 du relais de commande d'un actionneur. Le circuit série constitué par chaque contact de fin de course avant 608 (tel que le contact de fin de course avant $AV_2$ correspondant à l'actionneur commandé par la sortie $S_2$) et les moyens de temporisation 62, 606 associés est connecté en parallèle sur la diode de protection 603 et sur le circuit série constitué par la bobine de relais 604 et le contact 607 du relais de temporisation 607 en position de repos. Lorsque le relais de temporisation 606 est excité, le contact 607 vient se placer en parallèle sur le contact de fin de course avant 608. Le point de connexion entre le contact de fin de course avant 608 et les moyens de temporisation 62, 606 est relié par une diode 623 et le montage en série de l'ensemble des contacts de fin de course arrière 609 ($AR_2$ à $AR_9$) des différentes sorties à mouvement double, à un coupleur optoélectronique 417 de l'étage de coupleurs optoélectroniques d'entrée 400. Les différents contacts de fin de course avant 608 (AV$_2$ à AV$_9$) dont seul le contact AV$_2$ est représenté sur la figure 3 et les diodes associées 623 sont donc connectés en parallèle tandis que les différents contacts de fin de course arrière 609 (AR$_2$ à AR$_9$) sont connectés en série. Ceci permet au phototransistor du coupleur optoélectronique 417, qui est polarisé par une résistance 313, de ne fournir un signal binaire "0" sur l'entrée d'une porte NI 312 que lorsque tous les contacts de fin de course arrière 609 (AR$_2$ à AR$_9$) sont fermés, c'est-à-dire lorsque tous les actionneurs à mouvement double ont terminé leur mouvement d'aller et retour. La porte NI 311, 312 du circuit de gestion 300 ne pourra donc fournir un signal de sortie que lorsque tous les actionneurs à mouvement double A seront revenus en position de départ avec le contact de fin de course arrière 609 activé.

La figure 2 montre le schéma du circuit de commande d'un relais 614, 615 de commande d'un actionneur B à mouvement simple, auquel sont associés des contacts de fin de course avant 618 et arrière 619 ainsi que des moyens de temporisation réglable 70, 616, 617. Les moyens de temporisation comprennent un potentiomètre de réglage 70 permettant de régler la durée T de la temporisation associé à une bobine 616 d'un relais de commande de temporisation et à un contact 617 commandé par la bobine 616 et permettant d'alimenter soit un coupleur optoélectronique tel que 420 par l'intermédiaire d'une résistance 622 et du contact de fin de course arrière 619 (AR$_{10}$) associé à l'actionneur à mouvement simple considéré soit un coupleur optoélectronique tel que 410 directement par l'intermédiaire d'une résistance 621. Le contact de fin de course avant 618 (AV$_{10}$) associé à l'actionneur à mouvement simple considéré est lui-même monté en série avec les moyens de temporisation 70,616 le circuit série constitué par le potentiomètre 70 et le contact de fin de course avant 618 étant lui-même monté en parallèle sur la bobine 614 du relais 614, 615 et la diode de protection 613.

Sur la figure 2 qui concerne une seule sortie simple $S_{10}$, on voit que les données enregistrées dans les mémoires 200 concernant l'état souhaité de cette sortie sont appliquées depuis les circuits d'interface 210, 220 par l'intermédiaire de résistances 315, 314 respectivement sur les collecteurs des phototransistors des coupleurs optoélectroniques 410, 420 respectivement. Si par exemple la sortie $S_{10}$ doit être activée (le signal de donnée fourni en $S_{10}$ étant de niveau 1 et par suite le signal fourni en $\overline{S_{10}}$ étant de niveau 0), c'est-à-dire si l'actionneur correspondant doit se déplacer vers l'avant, on voit que les deux sorties des coupleurs optoélectroniques 410, 420 qui sont reliées à deux entrées d'une porte NI 311, 312 ne seront toutes deux au niveau logique "0" que lorsque le contact de fin de course avant 618 ($AV_{10}$) sera activé. Inversement, si la sortie $S_{10}$ ne soit pas être activée, c'est-à-dire si l'actionneur B doit rester en arrière ou présenter un mouvement de recul, les deux sorties des photocoupleurs optoélectroniques 410, 420 ne seront toutes deux au niveau logique "0" que lorsque le contact de fin de course arrière 619 ($AR_{10}$) est activé. On remarquera que dans tous les cas, la porte NI 311 ne pourra délivrer un signal de sortie de niveau 1 que lorsque le mouvement désiré de l'actionneur B est bien terminé, que celui-ci s'effectue dans un sens ou dans un autre.

La figure 7 montre le schéma d'ensemble du circuit de gestion 300 qui comprend une porte NI 311, 312 dont le nombre d'entrées est égal à 2n +1, n étant le nombre de sorties simples $S_{10}$ à $S_{16}$. En effet, la porte NI 311, 312 possède une entrée commune aux divers actionneurs à mouvement double, reliée au compteur optoélectronique 417 de la figure 3 et pour chaque sortie simple $S_{10}$ à $S_{16}$ une première entrée reliée à un coupleur optoélectronique 410 à 416 respectivement et par l'intermédiaire d'une résistance 314 à la sortie correspondante $S_{10}$ à $S_{16}$ du circuit d'interface 210, et une seconde entrée reliée à un coupleur optoélectronique 420 à 426 respectivement et par l'intermédiaire d'une résistance 315 à la sortie complémentaire correspondante $\overline{S_{10}}$ à $\overline{S_{16}}$ du circuit d'interface 220. Les divers coupleurs 411 à 416 et les divers coupleurs 421 à 426 associés à des contacts de fin de course 618 ($AV_{11}$ à $AV_{16}$) et 619 ($AR_{11}$ à $AR_{16}$) sont analogues respectivement aux coupleurs 410 et 420 de la figure 2.

On voit d'après le schéma des figures 2, 3 et 7 que la porte NI 311, 312 délivre un signal en sortie lorsque l'ensemble des actionneurs à mouvement double A sont revenus en arrière (contact de fin de course arrière 609 activé) et lorsque chacun des actionneurs à mouvement simple B est arrivé dans la position qui a été programmée (soit en avant si la donnée relative à la sortie simple correspondante est "1" soit en arrière si la donnée relative à la sortie simple correspondante est "0"). Les circuits décrits présentent donc un avantage essentiel dans la mesure où lors de la programmation il n'est pas nécessaire de tenir compte de l'état réel des divers contacts de fin de course 608, 609, 618 619. En effet, les contacts de fin de course 608, 609 associés aux sorties doubles $S_2$ à $S_9$ sont autonomes sur chaque circuit de sortie et les contacts de fin de course associés aux sorties simples $S_{10}$ à $S_{16}$ sont automatiquement polarisés dans le circuit de gestion 300 suivant l'état de la sortie programmée.

Le signal issu de la porte NI 311, 312, après mise en forme dans le circuit 310 permet de faire passer le dispositif à la séquence suivante en incrémentant le compteur 100 d'avance du programme et d'adressage des mémoires.

Comme on peut le voir sur la figure 7, la sortie de la porte NI 311, 312 est d'une part reliée à la masse par le montage parallèle d'une résistance 316 et d'un condensateur 317 formant filtre et d'autre part appliquée par l'intermédiaire d'une porte inverseuse 318 et d'une résistance 319 à une première entrée d'une porte NON ET 320 dont la sortie est reliée à une borne d'un condensateur 321. L'autre borne du condensateur 321 est connectée d'une part à une résistance 322 dont l'autre extrémité est à la masse et d'autre part à l'entrée d'une porte inverseuse 323 dont la sortie est reliée par rétrocouplage à la seconde entrée de la porte NON ET 320. La sortie de la porte inverseuse 323 est en outre reliée par une porte inverseuse 324 et une résistance 325 à la base d'un transistor 328 de commande de l'incrémentation du compteur 100. Un condensateur 326 est monté en parallèle sur l'espace base-émetteur du transistor 328 tandis qu'une résistance de polarisation 327 est connectée entre l'alimentation et le collecteur du transistor 328.

Les figures 6A et 6B permettent de voir de façon plus détaillée la constitution des mémoires 200, du compteur 100, des circuits d'interface 210, des circuits de remise à zéro et des commutateurs 130 servant à la programmation.

Le compteur 100 d'avance programme et d'adressage des mémoires 200 peut comprendre deux registres 111 et 112 correspondant respectivement aux dizaines et aux unités et permettant de programmer des séquences de 0 à 99. Naturellement, un nombre de séquences supérieur est possible si le compteur 100 comprend des registres supplémentaires pour les centaines, etc.. Des roues codeuses 10 permettent de présélectionner directement de façon manuelle une séquence du programme en positionnant le compteur 100 à la valeur désirée. L'incrémentation du compteur 100 est réalisée par les éléments de circuit 810, 811 à 813 et 830 qui comprennent des portes logiques 810 associées à des éléments de polarisation 811 à 813 et sont commandés par le signal C issu du circuit de mise en forme 310, lequel signal C, lorsqu'il passe à un niveau haut provoque le passage du commutateur 830 à sa position haute et entraîne ainsi l'incrémentation d'une unité du registre 112 (fig. 6A).

La remise à zéro générale des registres 111, 112 peut être réalisée soit directement de façon manuelle au moyen de l'interrupteur 9 associé aux éléments de polarisation 814 à 819 soit à partir de l'information appliquée sur la sortie $S_1$ des mémoires 200 et délivrée en sortie du circuit d'interface 210 par l'intermédiaire des circuits de commande de remise à zéro 801 à 810 associés à une diode 41 de visualisation. Le signal issu du circuit d'interface 210 sur la sortie $S_1$ est appliqué par l'intermédiaire de résistances 803, 804 sur les bases des transistors 801, 802 respectivement tandis que les émetteurs des transistors 801, 802 sont reliés à la masse et les collecteurs des transistors 801, 802 sont reliés à une source d'alimentation par des résistances de polarisation 805, 806. Une diode de visualisation 41 est en outre montée en série avec la résistance 805 tandis que l'émetteur du transistor 801 est relié à la base du transistor 802 par le montage parallèle d'une résistance 808 et d'un condensateur 807. Le collecteur du transistor 802 est relié par une porte inverseuse 810 et une diode 809 aux entrées de remise à zéro des registres 111, 112 isolées de la masse par un condensateur 115. Le commutateur 5 permet d'isoler des circuits 801 à 810 l'entrée de remise à zéro des registres 111,112 et de changer ces registres à l'aide des roues codeuses 10 pour réaliser une présélection. Lorsque le commutateur 5 est actionné, les entrées de chargement des registres 111, 112 sont mises à la masse et ne sont plus alimentées à travers la résistance 820. Les roues codeuses 10 permettent de mettre à la masse ou d'alimenter par des résistances de polarisation 113, 114 les entrées de codage binaire des registres 111, 112.

On voit sur la figure 6B des mémoires 200 comprenant plusieurs mémoires 201 à 204 adressées à partir des registres 111, 112 par l'intermédiaire de circuits tampons 230. Chacune des mémoires 201 à 204 présente des entrées de données $S_1$ à $S_4$, $S_5$ à $S_8$, $S_9$ à $S_{12}$, $S_{13}$ à $S_{16}$ reliées à des moyens d'entrée de données constitués par des commutateurs 130 permettant de mettre chaque entrée à la masse par une résistance 132 ou d'appliquer un niveau de tension par une résistance 131 de polarisation. Un commutateur 2 permet en outre de passer d'un fonctionnement automatique à un fonctionnement manuel et un interrupteur 6, associé à une résistance 133 permet la commande de l'inscription de données dans les mémoires 200.

Les entrées de données $S_1$ à $S_{16}$ des mémoires 201 à 204 sont reliées à des circuits d'interface 210 et à des circuits inverseurs 220, non représentés. La sortie du circuit d'interface 210 correspondant à l'entrée de donnée $S_1$ de RAZ est reliée par les résistances 803 et 804 aux bases des transistors 801, 802 comme indiqué précédemment tandis que les sorties du circuit d'interface 210 correspondant aux entrées de données $S_2$ à $S_{16}$ sont reliées, comme indiqué précédemment en référence à la figure 8, à l'étage de coupleurs optoélectroniques de sortie 500 qui alimente les relais 604, 605 ou 614, 615 de commande des actionneurs. Chaque sortie $S_2$ à $S_{16}$ des circuits d'interface 210 est en outre reliée par une résistance 701 à la base d'un transistor 702 dont l'émetteur est à la masse et le collecteur est relié à une source d'alimentation par une résistance de polarisation 703 montée en série avec une diode électroluminescente telle que 48, pour permettre une visualisation de l'état de la sortie correspondante. On n'a représenté sur la figure 6 qu'un seul circuit de visualisation 700 et qu'un seul circuit de commande de relais, associés à titre d'exemple à la sortie $S_8$.

La figure 9 montre un exemple de panneau regroupant les organes de manoeuvre et de visualisation d'un dispositif de commande selon l'invention. Ainsi, on voit sur ce panneau des commutateurs 130 comprenant un commutateur 21 de commande de remise à zéro, huit commutateurs 22 à 29 correspondant à des sorties doubles, sept commutateurs 30 à 36 correspondant à des sorties simples, seize éléments de visualisation 41 à 56 correspondant respectivement à l'état des sorties associées aux commutateurs 21 à 36, un élément de visualisation supplémentaire 40 associé par exemple à l'interrupteur 1 de mise sous tension, sept interrupteurs référencés 3 à 9 et permettant divers modes de fonctionnement, tels que "inhibation du programme", pour un fonctionnement en manuel dans lequel les sorties $S_1$ à $S_{16}$ peuvent être activées directement avec les mêmes boutons que pour la programmation "avance rapide du programme" qui permet un effacement rapide du programme présélection, "écriture des données", "avance pas à pas", "départ d'un cycle automatique", "remise à zéro". Un commutateur 2 permet en outre la commutation du fonctionnement "manuel-automatique". En fonctionnement automatique, toutes les manipulations manuelles sont inhibées et les fausses manoeuvres sont empêchées.

Enfin, les roues codeuses 10 permettent une présélection d'une séquence et les éléments d'affichage 11 permettent la visualisation du numéro de la séquence en cours. Un interrupteur 12 d'isolation des sorties autorise en outre une simulation du programme enregistré.

On donnera ci-dessous un exemple de programmation.

Soit à faire le cycle suivant lequel il convient d'exécuter un premier mouvement simple d'avance d'un premier actionneur $A_1$, un deuxième mouvement simple d'avance d'un autre actionneur $B_1$, un mouvement de retour du second actionneur $B_0$ puis un mouvement de retour du premier actionneur $A_0$. Les opérations de programmation seront les suivantes :

- se mettre en manuel (clef 2)
- choisir deux sorties simples $S_{10}$ et $S_{11}$ par exemple et les affecter à A et B
- se mettre au pas 01 à l'aide de l'avance pas à pas 7
- abaisser l'interrupteur 30 correspondant à la sortie A
- appuyer sur écriture 6 (le voyant normalisation sortie 50 est activé)
- avancer au pas 02.
- abaisser l'interrupteur 31 correspondant à la sortie B.
- appuyer sur écriture 6 (le voyant normalisation sortie 51 est activé).
- avancer au pas 03.
- relever l'interrupteur 31 correspondant à la sortie B.
- appuyer sur écriture 6 (voyant 50 activé, voyant 51 éteint).
- avancer au pas 04.
- relever l'interrupteur 30 correspondant à la sortie A

- appuyer sur écriture 6 (voyants 50 et 51 éteints)

- présélectionner le pas 05 à l'aide des roues co-deuses 10.

- abaisser l'interrupteur 21 de RAZ

- appuyer sur écriture 6.

- relever l'interrupteur présélection 5.

- le programme se remet à zéro.

- Pour vérifier le programme, il suffit de faire avancer pas à pas, les sorties seront activées à chaque pas dans l'ordre où elles ont été programmées.

- Pour faire le cycle en automatique, se mettre avec le commutateur à clef 2 sur automatique, la visualisation 11 des numéros de séquences se remet automatiquement à zéro. Ensuite appuyer sur l'interrupteur départ, cycle auto 8 le cycle se déroulera automatiquement et le dispositif de commande fera lui-même la gestion des fins de courses associées aux actionneurs A et B.

On notera que l'on peut sur le même pas programmer simultanément, soit des sorties doubles, soit des sorties simples (voir figure 10).

Dans l'exemple de la figure 10, lors du pas 1 un seul actionneur connecté à une première sortie simple est activé et présente un mouvement d'avance $A_1$. Au pas 2, deux actionneurs connectés à une première et à une deuxième sorties doubles effectuent des mouvements d'aller et retour $B_1-B_0$ et $C_1-C_0$ respectivement. Au pas 3, un actionneur connecté à une seconde sortie simple est activé et présente un mouvement d'avance $D_1$ tandis qu'un actionneur connecté à une troisième sortie double effectue un mouvement d'aller-retour $F_1-F_0$. Au pas 4, l'actionneur connecté à la première sortie simple effectue un mouvement de recul $A_0$ et au pas 5, l'actionneur connecté à la seconde sortie simple effectue un mouvement de recul $D_0$.

Il n'existe pas de limitation de mixage des sorties par pas, et plusieurs coffrets de dispositifs de commande peuvent commander une même machine de
même que le nombre de sorties doubles ou simples par
coffret n'est pas limitatif.

REVENDICATIONS

1. Dispositif de commande d'automatismes programmable de façon séquentielle, comprenant des moyens (130) d'entrée de données, des mémoires (200) pour stocker les données fournies par les moyens (130) d'entrée de données, des moyens de détection des signaux fournis par des capteurs (608,609;618,619), des moyens (210,220,300,310) de traitement et de gestion des données stockées dans les mémoires (200) et des moyens (600) d'application de signaux de commande à des actionneurs,

c a r a c t é r i s é   en ce qu'il comprend un compteur (100) d'avance de programme et d'adressage des mémoires, en ce que les moyens (130) d'entrée de données comprennent une pluralité de commutateurs en nombre égal au nombre d'actionneurs, .   en ce que des moyens (400,300, 310) sont prévus pour n'autoriser le passage d'une séquence à la suivante qu'après comparaison de l'ensemble des signaux fournis par les capteurs (608,609,618,619) et des données relatives à la séquence en cours enregistrées dans les mémoires (200), et

en ce que des moyens (400,300,310) d'autorisation de passage de séquence à l'autre comprennent des coupleurs optoélectroniques d'entrée (400) dont l'état est fonction de l'état des capteurs (608,609,618,619), des moyens (300) de gestion des informations fournies par les coupleurs optoélectroniques d'entrée (400) et des données enregistrées relatives à la séquence en cours, lesquels moyens de gestion (300) comprennent une porte NI (311, 312), et des moyens (310) de mise en forme du signal fourni par lesdits moyens (300) de gestion.

2. Dispositif de commande selon la revendication 1, caractérisé en ce qu'il comprend à la fois des moyens (614,615) d'application de signaux de commande à des actionneurs à mouvement simple (B), et des moyens (614,615) d'application de signaux de commande à des actionneurs à mouvement double d'aller et retour (A).

3. Dispositif selon la revendication 2, caractérisé en ce qu'il comprend des moyens de temporisation (70,616,617; 62,606,607) associés à chacun des moyens (614,615; 604, 605) d'application de signaux de commande à des actionneurs à mouvement simple (B) ou à mouvement double d'aller et retour (A).

4. Dispositif selon l'une des revendications 1 à 3, caractérisé en ce que les capteurs (608, 609, 618,619) sont constitués par des capteurs de position dits "fin de course" et en ce que les moyens (604, 605;614,615) d'application de signaux de commande à des actionneurs sont constitués par des relais.

5. Dispositif selon les revendications 1 à 4, caractérisé en ce que pour chaque relais (614,615) de commande d'un actionneur à mouvement simple (B), le circuit série constitué par le capteur de fin de course avant associé (618) et les moyens de temporisation (70, 616) est monté en parallèle sur la bobine (614) dudit relais (614,615); deux coupleurs optoélectroniques d'entrée (410,420) sont raccordés respectivement à chacune des bornes coopérant avec l'extrémité d'un commutateur (617) commandé par les moyens de temporisation (70,616) et relié à une source d'alimentation; l'un des coupleurs (420) étant raccordé par l'intermédiaire du capteur de fin de course arrière (619) associé à l'actionneur; et la sortie de l'un (410) des deux coupleurs optoélectroniques d'entrée (410,420) est reliée d'une part à une entrée de la porte NI (311, 312) et d'autre part à une sortie ($S_{10}$) des mémoires (200) tandis que la sortie de l'autre coupleur optoélectronique d'entrée (420) est reliée d'une part à une autre entrée de la porte NI (311,312) et d'autre part à une sortie com-

plémentaire ($\overline{S}_{10}$) des mémoires (200).

6 . Dispositif selon les revendications 1 à 4, caractérisé en ce que pour chaque relais (604, 605) de commande d'un actionneur à mouvement double (A), le circuit série constitué par le capteur de fin de course avant associé (608) et les moyens de temporisation (62,606) est monté entre l'une des bornes de la bobine (604) du relais (604,605) et la borne commune du commutateur (607) commandé par les moyens de temporisation, (62,606) qui coopèrent avec l'extrémité du commutateur, l'une des bornes (607) étant reliée à la deuxième borne de la bobine (604) du relais (604,605) et l'autre borne coopérant avec l'extrémité du commutateur (607) étant reliée d'une part au point commun entre le capteur de fin de course avant (608) et les moyens de temporisation (62,606) et d'autre part du circuit série des différents capteurs de fin de course arrière (609) associés aux différents actionneurs à mouvement double (A), lequel circuit série est relié à l'entrée d'un coupleur optoélectronique d'entrée (417) dont la sortie est reliée d'une part à une entrée de la porte NI (311,312) et d'autre part à un circuit de polarisation (313).

7. Dispositif selon l'une quelconque des revendications 1 à 6, caractérisé en ce qu'il comprend en outre des moyens (800) de remise à zéro du programme .enregistré.

8. Dispositif selon l'une quelconque des revendications 1 à 7, caractérisé en ce qu'il comprend en outre des moyens de commutation assurant une avance rapide du programme ou une avance pas à pas.

9 . Dispositif selon l'une quelconque des revendications 1 à 8, caractérisé en ce que des roues codeuses (10) sont associées au compteur (100) d'avance de programme pour présélectionner une séquence de programmation.

120

100

110

130

200

S10    210    S2    220

S10    500    S2    $\overline{S10}$  $\overline{S2}$    300

608,609

600    600    400

310    618,619

Fig_1

O    Pas 01
      A 1

B1
B0
Pas 02

C1
C0

Pas 05

D0

Pas 03

E0  E1    D1

Pas 04
A0

Fig_10

0117214

610

613  614  618  AV₁₀

R

510  611  70  616

612  T  RT

500  0v

621  410  S₁₀  S̄₁₀  315  314  +V_cc

RT

ov puis.  ov logique  311

+24v  AR₁₀  400

617  R̄T  619  622  420

R  Avance

Recul

615  R̄  ov puis.  ov logique

**Fig-2**

**Fig-4**

B

619

618

AR₁₀  AV₁₀

Fig-3

Fig-5

0117214

Fig_6A

Fig-6B

0117214

Fig-7

0117214

FIG.8

Vers RAZ

S1, S2, S3, S4 ... S16

210, 211, 500, 502, 503, 504, 505, 506, 509, 510, 513, 514, 516, 601, 602, 603, 604, 610

+24V, OV, 24v

0117214

Fig. 9

SEQUENCE
11

ISOLATION SORTIES
12

ROUE CODEUSE PRESELECTION
10

3 1 +
2 1 +

AUTO — HANUEL
2

RAZ
9

DEPART CYCLE AUTO
8

AVANCE PAS à PAS
7

ECRITURE
6

PRESELECTION
5

AVANCE RAPIDE PROGRAMME
4

INHIBE PROGRAMME
3

MISE SOUS TENSION
1

SORTIES SIMPLES
50 51 52 53 54 55 56

SORTIES DOUBLES
42 43 44 45 46 47 48 49

RAZ
21

130

22 23 24 25 26 27 28 29 30 31 32 33 34 35 36

40 41

62 63 64 65 66 67 68 69
70 71 72 73 74 75 76

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | GB-A-1 459 177 (ROBERTS) <br> * En entier * | 1,2,6 | G 05 B 19/04 |
| Y | FR-A-1 593 584 (WESTINGHOUSE) <br> * Page 2, lignes 4-7; page 8, lignes 22-40; pages 18-20 * | 1,2,6 | |
| Y | US-A-4 137 565 (XEROX) <br> * Abr g ; figure 3 * | 1,2,6 | |
| Y | FR-A-2 142 908 (FMC) <br> * Page 4, lignes 11-16; figure 4 * | 3-5 | |
| Y | FR-A-2 245 998 (CARL HURTH) <br> * Page 6, lignes 10-15; figure 4 * | 3-5 | DOMAINES TECHNIQUES RECHERCHES (Int. Cl. 3) |
| A | FR-A-2 472 786 (EDF) <br> * Page 10, lignes 9-36; figure 2 * | 7-9 | G 05 B 19/00 |

Le présent rapport de recherche a été établi pour toutes les revendications

| Lieu de la recherche <br> LA HAYE | Date d'achèvement de la recherche <br> 10-05-1984 | Examinateur <br> RESSENAAR J.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82